# EUROPEAN PATENT SPECIFICATION

(11) **EP 0 919 864 B1**
(45) Date of publication and mention of the grant of the patent: **28.01.2004**
(21) Application number: 98203845.7
(22) Date of filing: 14.11.1998
(51) Int. Cl.: G03C 1/498, C08K 5/00, G03C 1/83

(54) **Support containing an antihalation dye for use in photothermographic elements**
Einen Lichthofschutzfarbstoff enthaltender Träger für die Verwendung in photothermographischen Elementen
Support contenant un colorant antihalo pour l'utilisation dans des éléments photothermographiques

(30) Priority: 26.11.1997 US 978653; 18.09.1998 US 156686
(43) Date of publication of application: 02.06.1999
(73) Proprietor: EASTMAN KODAK COMPANY, Rochester, New York 14650 (US)
(72) Inventor: Weidner, Charles Harry, Rochester, New York 14650-2201 (US); Java, Dorothy Theresa, Rochester, New York 14650-2201 (US); Priebe, Elizabeth Kizenko, Rochester, New York 14650-2201 (US)
(74) Representative: Haile, Helen Cynthia

(56) References cited:
- EP-A- 0 658 804
- US-A- 4 258 129
- KELLER K.: 'Science and Technology of Photography', 1993, VCH, WEINHEIM

## Description

### FIELD OF THE INVENTION

This invention relates to a photothermographic imaging element suited for use with a red or near-infrared laser. More specifically, this invention relates to a photothermographic element comprising a support containing an antihalation dye.

### BACKGROUND OF THE INVENTION

There is often desired for photosensitive emulsion layers or other layers of silver halide light-sensitive imaging materials, colored layers that absorb light of specific wavelengths in order to provide filtration of unwanted wavelengths of light, absorb scattered light within a layer, or provide halation protection. These coloring layers can be located above the photosensitive layer, within the photosensitive layer, between the photosensitive layer and the support, within the support, or on the opposite side of the support. When the colored layer is located in the latter three areas as described above, it is able to prevent unwanted back reflection of the light, thus providing halation protection to the photosensitive material.

Antihalation is particularly important when a film is exposed using a laser because of the high intensity of light emitted by the laser, necessitating high levels of dye to be used in order to provide adequate absorption of light. This can lead to undesirable coloration of the imaging element, particularly with regard to a photothermographic system where wet processing steps are unavailable to provide washout of the filtration dye.

### PROBLEM TO BE SOLVED BY THE INVENTION

The problem to be solved by this invention is to provide a support for a photothermographic element, wherein the support contains a dye that is useful for absorbing laser light in the red and near-infrared regions (i.e. in a wavelength range of 660 to 800 nm), that has very little extraneous absorption in unwanted areas of the visible spectrum, that is stable with time and that functions as an antihalation layer.

### SUMMARY OF THE INVENTION

This invention comprises a photothermographic element comprising at least one photothermographic layer on a support, wherein the support contains a dye of structure I: 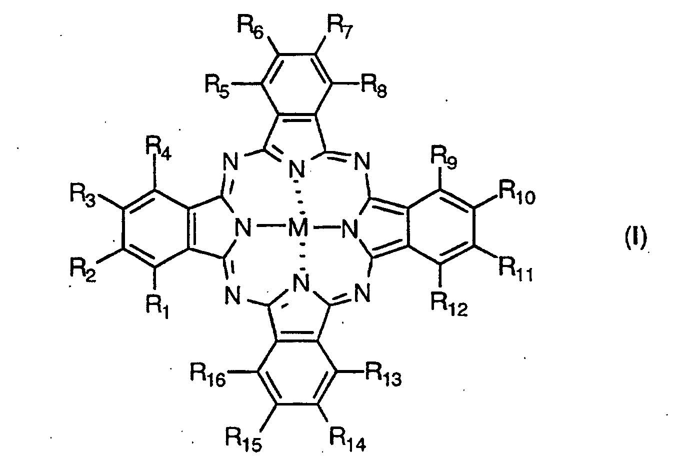 wherein
M is a multi-valent metal atom;
each of R₁, R₄, R₅, R₈, R₉, R₁₂,R₁₃, and R₁₆ independently represent a hydrogen atom, or a substituted or unsubstituted, branched or unbranched alkyl group;
each of R₂, R₃, R₆, R₇, R₁₀, R₁₁, R₁₄, and R₁₅ independently represent a hydrogen atom, a halogen atom, a substituted or unsubstituted, branched or unbranched alkyl group, a substituted or unsubstituted aryl group, a substituted or unsubstituted alkoxy group or a substituted or unsubstituted aryloxy group; or one or more of the adjacent pairs R₁ and R₂, R₂ and R₃, R₃ and R₄, R₅ and R₆, R₆ and R₇, R₇ and R₈, R₈ and R₉, R₉ and R₁₀, R₁₀ and R₁₁, R₁₁ and R₁₂, R₁₃ and R₁₄, R₁₄ and R₁₅ and R₁₅ and R₁₆ taken together may represent the atoms necessary to form a substituted or unsubstituted aromatic or heteroaromatic ring; and wherein the support has a peak absorption between 660 nm and 800 nm.

### ADVANTAGEOUS EFFECT OF THE INVENTION

A particular advantage of the dyes used in the present invention is their excellent thermal stability, which allows for their incorporation directly into a support, preferably a polymeric support, before or during extrusion or casting. Another advantage is the excellent absorption of these dyes at the desired wavelengths as evidenced by their state-of-the-art properties as antihalation dyes in a photothermographic element. Another advantage is the stability of these dyes with time, both under hydrolytic and photolytic conditions.

### BRIEF DESCRIPTION OF THE DRAWING

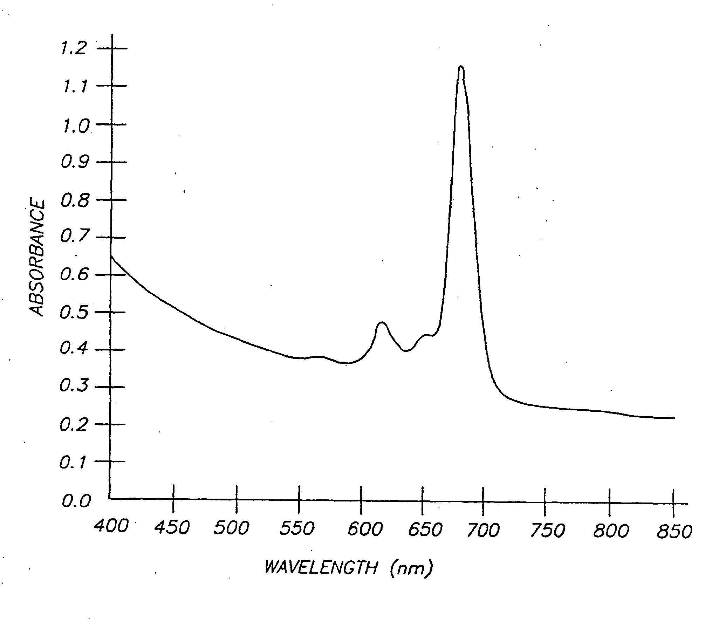

Fig. 1 shows the absorbance of a photothermographic element of the invention.

### DETAILED DESCRIPTION OF THE INVENTION

As mentioned above, the dyes utilized in the photothermographic element of this invention is a dye of structure I: 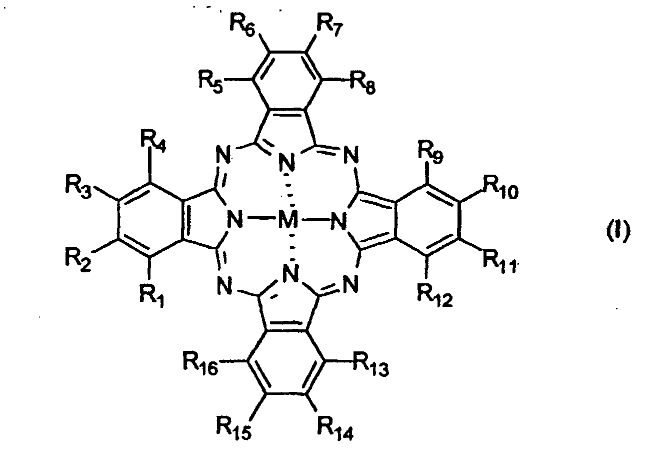 wherein
M is a multi-valent metal atom;
each of R₁, R₄, R₅, R₈, R₉, R₁₂,R₁₃, and R₁₆ independently represent a hydrogen atom, or a substituted or unsubstituted, branched or unbranched alkyl group;
each of R₂, R₃, R₆, R₇, R₁₀, R₁₁, R₁₄, and R₁₅ independently represent a hydrogen atom, a halogen atom, a substituted or unsubstituted, branched or unbranched alkyl group, a substituted or unsubstituted aryl group, a substituted or unsubstituted alkoxy group or a substituted or unsubstituted aryloxy group; or one or more of the adjacent pairs R₁ and R₂, R₂ and R₃, R₃ and R₄, R₅ and R₆, R₆ and R₇, R₇ and R₈, R₈ and R₉, R₉ and R₁₀, R₁₀ and R₁₁, R₁₁ and R₁₂, R₁₃ and R₁₄, R₁₄ and R₁₅ and R₁₅ and R₁₆ taken together may represent the atoms necessary to form a substituted or unsubstituted aromatic or heteroaromatic ring.

M is preferably a multi-valent metal atom selected from the group consisting of: Mg, Ca, Sr, Ti, V, Cr, Mn, Fe, Co, Ni, Cu, Zn, B, Al, Sn, Pb, Mo, Pd and Pt. Particularly preferred are Mg, Ni, Zn, and Cu.

Alkyl and alkoxy groups preferably contain 1 to 10 carbon atoms, more preferably 1 to 6 carbon atoms. Alkyl groups include, for example, methyl, ethyl, propyl, isopropyl, butyl sec. butyl, tert-butyl, heptyl or decyl. Alkoxy groups include, for example, methoxy, ethoxy, propoxy, or tert-butoxy. Aryl and aryloxy groups preferably contain 6 to 12 carbon atoms, more preferably 5 to 8 carbon atoms. Aryl groups that can be used include, for example, phenyl, tolyl, naphthyl, 2,4-dimethylphenyl, 2-ethylphenyl, 3-ethylphenyl, 4-ethylphenyl, 2-isopropylphenyl, 3-isopropylphenyl, 4-isopropylphenyl, 4-tert-butylphenyl, 2-methoxyphenyl, 3-methoxyphenyl, 4-methoxyphenyl, 2-ethoxyphenyl, 4-ethoxyphenyl, or 4-isopropoxyphenyl. Aryloxy groups, include, for example, phenoxy, substituted phenoxy such as 2-methylphenoxy, 4-methylphenoxy, 2-ethylphenoxy, 4-ethylphenoxy, 4-cumylphenoxy, 4-isopropylphenoxy, 4-tert-butyl-phenoxy, 2-chlorophenoxy, or 4,-chlorophenoxy.

Aromatic ring structures include, for example phenyl, 1,2-naphthyl, 2,3-naphthyl, or phenanthryl. Heteroaromatic rings include, for example, pyridine, pyrazine, pyridazine and pyrimidine.

When reference in this application is made to a particular moiety it is to be understood that the moiety may itself be unsubstituted or substituted with one or more substituents (up to the maximum possible number). For example, "alkyl group" refers to a substituted or unsubstituted alkyl, while "benzene group" refers to a substituted or unsubstituted benzene (with up to six substituents). Generally, unless otherwise specifically stated, substituent groups usable on molecules herein include any groups, whether substituted or unsubstituted, which do not destroy properties necessary for the photothermographic utility. Examples of substituents on any of the mentioned groups can include known substituents, such as: halogen, for example, chloro, fluoro, bromo, iodo; alkoxy, particularly those "lower alkyl" (that is, with 1 to 6 carbon atoms, for example, methoxy, ethoxy; substituted or unsubstituted alkyl, particularly lower alkyl (for example, methyl, trifluoromethyl); thioalkyl (for example, methylthio or ethylthio), particularly either of those with 1 to 6 carbon atoms; substituted and unsubstituted aryl, particularly those having from 6 to 20 carbon atoms (for example, phenyl); and substituted or unsubstituted heteroaryl, particularly those having a 5 or 6-membered ring containing 1 to 3 heteroatoms selected from N, O, or S (for example, pyridyl, thienyl, furyl, pyrrolyl); acid or acid salt groups such as any of those described below; and others known in the art. Alkyl substituents may specifically include "lower alkyl" (that is, having 1-6 carbon atoms), for example, methyl, or ethyl. Further, with regard to any alkyl group or alkylene group, it will be understood that these can be branched or unbranched and include ring structures.

Dyes of structure I are known and some are commercially available. The dyes can be made by the methods outlined in *The Phthalocyanines*, Vol. I and II, Moser, F.H. and Thomas, A.L., CRC Press, Boca Raton, Florida, 1983 or by the method of Wöhrle, D.; Schnurpfeil, G.; Knothe, G. Dyes and Pigments 1992, *18*, 91.

Illustrative dyes for use in the imaging element of this invention are represented, but not limited to, the examples shown in Table 1 (the peak absorption (λmax) of the dyes dissolved in acetone (or toluene) is also given in Table 1):

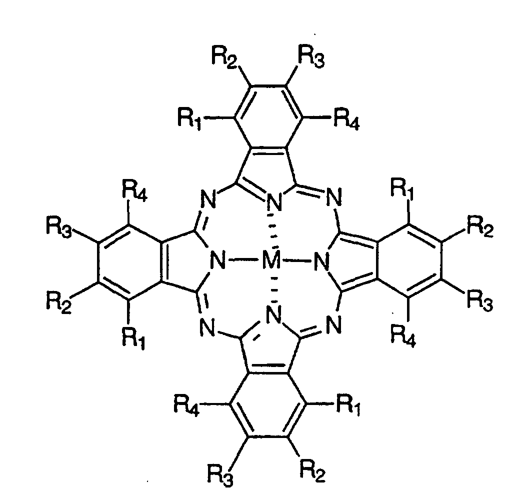

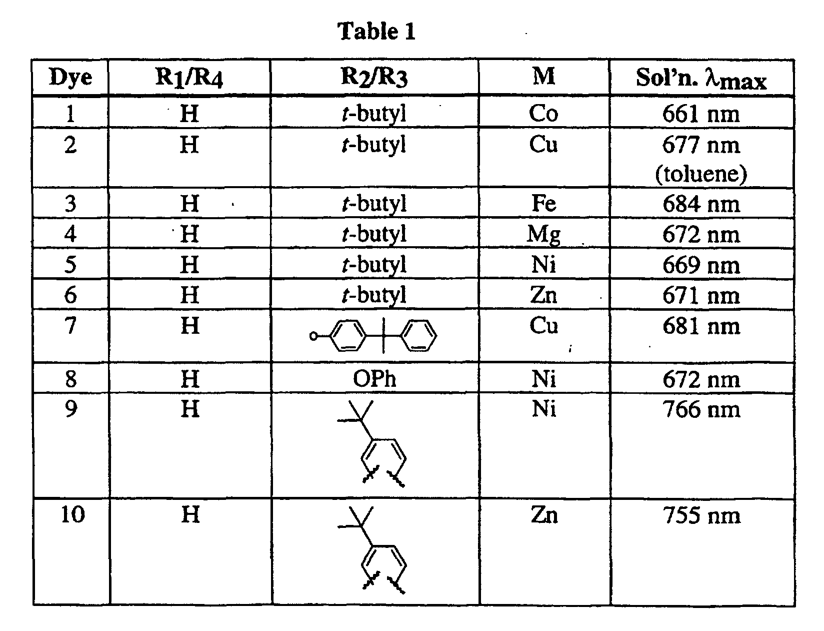

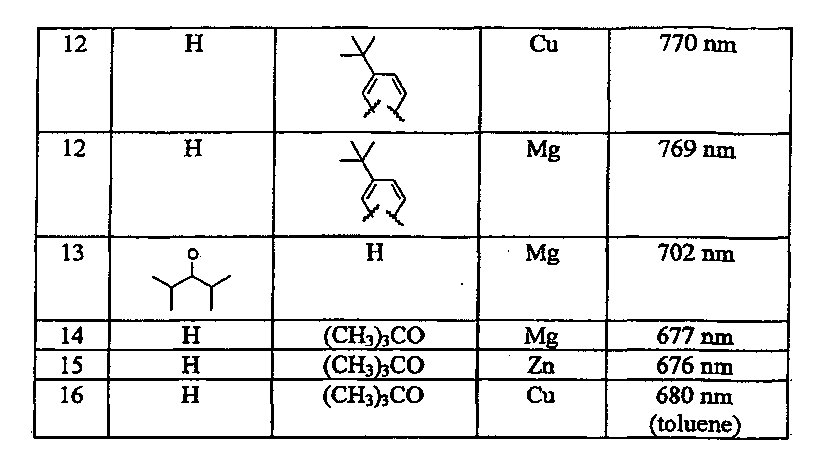

As can be seen from Table 1, dyes useful in this invention have a peak absorption between 660 and 800 nm.

In preferred embodiments of the invention the support comprises a polymeric material containing the dye. The support preferably comprises a polymeric material, more preferably a polyester. The polymer may be any article forming polymer such as a polyester capable of being cast into a film or sheet. The polyesters should have a glass transition temperature between 50°C. and 150°C., preferably 60°-100°C., should be orientable, and have an inherent viscosity (I.V.) of at least 0.50, preferably 0.6 to 0.9. Suitable polyesters include those produced from aromatic, aliphatic or cycloaliphatic dicarboxylic acids of 4-20 carbon atoms and aliphatic or alicyclic glycols having from 2-24 carbon atoms. Examples of suitable dicarboxylic acids include terephthalic, isophthalic, phthalic, naphthalene dicarboxylic acid, succinic, glutaric, adipic, azelaic, sebacic, fumaric, maleic, itaconic, 1,4-cyclohexanedicarboxylic, so-diosulfoisophthalic and mixtures thereof. Examples of suitable glycols include ethylene glycol, propylene glycol, butanediol, pentanediol, hexanediol, 1,4-cyclohexanedimethanol, diethylene glycol, other polyethylene glycols and mixtures thereof. Such polyesters are well known in the art and may be produced by well-known techniques, e.g., those described in U.S. Pat. Nos. 2,465,319 and 2,901,466. Preferred continuous matrix polymers are those having repeat units from terephthalic acid or naphthalene dicarboxylic acid and at least one glycol selected from ethylene glycol, 1,4-butanediol and 1,4-cyclohexanedimethanol.
Poly(ethylene terephthalate), which may be modified by small amounts of other monomers, is especially preferred.

The dye is preferably used in an amount of 10 to 100,000 ppm (parts per million), more preferably 10 to 10,000 and most preferably 20 to 1,000 ppm, based on the amount of the polymer.

The dye is generally added to the polymeric material by first forming a concentrate of the dye in a relatively small amount of the polymeric material and then adding this concentrate to the desired amount of polymeric material for preparing the support by extrusion, casting or other film forming technique.

The support can contain additional dyes, if desired. Suitable dyes include, for example, an anthraquinone dye of the general formula: 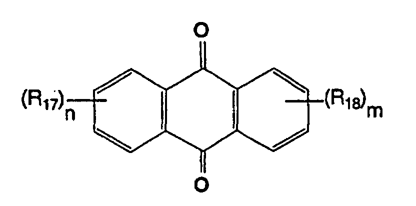 wherein R 17 and R18 are independently a hydrogen atom or an amino group o the formula: 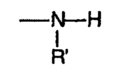 wherein R' is substituted or unsubstituted alkyl or substituted or unsubstituted aryl and n and m are independently 1-4, with the proviso that at least one of n or m is at least 1.

Particularly preferred dyes are of the formulae: 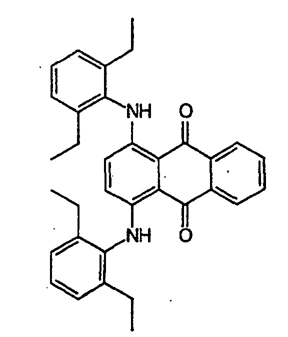 and

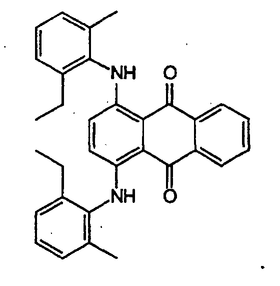

The photothermographic element comprising one or more light sensitive layers, preferably silver halide emulsion light sensitive layers.

A typical photothermographic element comprises a support, a photothermographic layer, a backing layer, an overcoat layer and various interlayers, such as, subbing layers, filter layers and the like.

The layers of a photothermographic element are generally prepared from a solution containing a binder and other components to give the layer the desired properties in an appropriate solvent. Preferred solvents are, for example, aromatic solvents, such as, toluene or xylene, ketone solvents, such as, methyl ethyl ketone, methyl isobutyl ketone and the like, tetrahydrofuran, ethyl acetate, chlorinated solvents such as dichloromethane and the like. The solvent can contain water, if desired.

Typical photothermographic elements of this invention comprise at least one photothermographic layer containing in reactive association in a binder, preferably a binder comprising hydroxyl groups, (a) photographic silver halide prepared in situ and/or ex situ, (b) an image-forming combination comprising (i) an organic silver salt oxidizing agent, preferably a silver salt of a long chain fatty acid, such as silver behenate, with (ii) a reducing agent for the organic silver salt oxidizing agent, preferably a phenolic reducing agent, and (c) an optional toning agent. References describing such imaging elements include, for example, U.S. Patents 3,457,075; 4,459,350; 4,264,725 and 4,741,992 and Research Disclosure, June 1978, Item No. 17029.

In the photothermographic material it is believed that the latent image silver from the silver halide acts as a catalyst for the described image-forming combination upon processing. A preferred concentration of photographic silver halide is within the range of 0.01 to 10 moles of photographic silver halide per mole of silver behenate in the photothermographic material. Other photosensitive silver salts are useful in combination with the photographic silver halide if desired. Preferred photographic silver halides are silver chloride, silver bromide, silver bromochloride, silver bromoiodide, silver chlorobromoiodide, and mixtures of these silver halides. Very fine grain photographic silver halide is especially useful. The photographic silver halide can be prepared by any of the known procedures in the photographic art. Such procedures for forming photographic silver halides and forms of photographic silver halides are described in, for example, Research Disclosure, December 1978, Item No. 17029 and Research Disclosure, June 1978, Item No. 17643. Tabular grain photosensitive silver halide is also useful, as described in, for example, U.S. Patent No. 4,43 5,499. The photographic silver halide can be unwashed or washed, chemically sensitized, protected against the formation of fog, and stabilized against the loss of sensitivity during keeping as described in the above Research Disclosure publications. The silver halides can be prepared in situ as described in, for example, U.S. Patent No. 4,457,075 or prepared ex situ by methods known in the photographic art.

The photothermographic element typically comprises an oxidation-reduction image forming combination that contains an organic silver salt oxidizing agent, preferably a silver salt of a long chain fatty acid. Such organic silver salts are resistant to darkening upon illumination. Preferred organic silver salt oxidizing agents are silver salts of long chain fatty acids containing 10 to 30 carbon atoms. Examples of useful organic silver salt oxidizing agents are silver behenate, silver stearate, silver oleate, silver laurate, silver hydroxystearate, silver caprate, silver myristate, and silver palmitate. Combinations of organic silver salt oxidizing agents are also useful. Examples of useful organic silver salt oxidizing agents that are not organic silver salts of fatty acids are silver benzoate and silver benzotriazole.

The optimum concentration of organic silver salt oxidizing agent in the photothermographic element will vary depending upon the desired image, particular organic silver salt oxidizing agent, particular reducing agent and particular photothermographic element. A preferred concentration of organic silver salt oxidizing agent is within the range of 0.1 to 100 moles of organic silver salt oxidizing agent per mole of silver halide in the element. When combinations of organic silver salt oxidizing agents are present, the total concentration of organic silver salt oxidizing agents is preferably within the described concentration range.

A variety of reducing agents are useful in the photothermographic element. Examples of useful reducing agents in the image-forming combination include substituted phenols and naphthols, such as bis-beta-naphthols; polyhydroxybenzenes, such as hydroquinones, pyrogallols and catechols; aminophenols, such as 2,4-diaminophenols and methylaminophenols; ascorbic acid reducing agents, such as ascorbic acid, ascorbic acid ketals and other ascorbic acid derivatives; hydroxylamine reducing agents; 3-pyrazolidone reducing agents, such as 1-phenyl-3-pyrazolidone and 4-methyl-4-hydroxymethyl-1-phenyl-3-pyrazolidone; and sulfonamidophenols and other organic reducing agents known to be useful in photothermographic elements, such as described in U.S. Patent 3,933,508, U.S. Patent 3,801,321 and Research Disclosure, June 1978, Item No. 17029. Combinations of organic reducing agents are also useful in the photothermographic element

Preferred organic reducing agents in the photothermographic element are sulfonamidophenol reducing agents, such as described in U.S. Patent 3,801,321. Examples of useful sulfonamidophenol reducing agents are 2,6-dichloro-4-benzene- sulfonamidophenol; benzenesulfonamidophenol; and 2,6-dibromo-4-benzenesulfonamidophenol, and combinations thereof.

An optimum concentration of organic reducing agent in the photothermographic element varies depending upon such factors as the particular photothermographic element, desired image, processing conditions, the particular organic silver salt and the particular oxidizing agent

The photothermographic element preferably comprises a toning agent, also known as an activator-toner or toner-accelerator. Combinations of toning agents are also useful in the photothermographic element. Examples of useful toning agents and toning agent combinations are described in, for example, Research Disclosure, June 1978, Item No. 17029 and U.S. Patent No. 4,123,282. Examples of useful toning agents include, for example, phthalimide, N-hydroxyphthalimide, N-potassium-phthalimide, succinimide, N-hydroxy-1,8-naphthalimide, phthalazine, 1-(2H)-phthalazinone and 2-acetylphthalazinone.

Post-processing image stabilizers and latent image keeping stabilizers are useful in the photothermographic element. Any of the stabilizers known in the photothermographic art are useful for the described photothermographic element. Illustrative examples of useful stabilizers include photolytically active stabilizers and stabilizer precursors as described in, for example, U.S. Patent 4,459,350. Other examples of useful stabilizers include azole thioethers and blocked azolinethione stabilizer precursors and carbamoyl stabilizer precursors, such as described in U.S. Patent 3,877,940.

The photothermographic elements as described preferably contain various colloids and polymers alone or in combination as vehicles and binders and in various layers. Useful materials are hydrophilic or hydrophobic. They are transparent or translucent and include both naturally occurring substances, such as gelatin, gelatin derivatives, cellulose derivatives, polysaccharides, such as dextran, gum arabic and the like; and synthetic polymeric substances, such as water-soluble polyvinyl compounds like poly(vinylpyrrolidone) and acrylamide polymers. Other synthetic polymeric compounds that are useful include dispersed vinyl compounds such as in latex form and particularly those that increase dimensional stability of photographic elements. Effective polymers include water insoluble polymers of acrylates, such as alkylacrylates and methacrylates, acrylic acid, sulfoacrylates, and those that have cross-linking sites. Preferred high molecular weight materials and resins include poly(vinyl butyral), cellulose acetate butyrate, poly(methylmethacrylate), poly(vinylpyrrolidone), ethyl cellulose, polystyrene, poly(vinylchloride), chlorinated rubbers, polyisobutylene, butadiene-styrene copolymers, copolymers of vinyl chloride and vinyl acetate, copolymers of vinylidene chloride and vinyl acetate, poly(vinyl alcohol) and polycarbonates.

Photothermographic elements can contain addenda that are known to aid in formation of a useful image. The photothermographic element can contain development modifiers that function as speed increasing compounds, sensitizing dyes, hardeners, antistatic agents, plasticizers and lubricants, coating aids, brighteners, other absorbing and filter dyes, such as described in Research Disclosure, December 1978, Item No. 17643 and Research Disclosure, June 1978, Item No. 17029.

The layers of the photothermographic element are coated on a support by coating procedures known in the photographic art, including dip coating, air knife coating, curtain coating or extrusion coating using hoppers. If desired, two or more layers are coated simultaneously.

Spectral sensitizing dyes are useful in the photothermographic element to confer added sensitivity to the element. Useful sensitizing dyes are described in, for example, Research Disclosure, June 1978, Item No. 17029 and Research Disclosure, December 1978, Item No. 17643.

A photothermographic element as described preferably comprises a thermal stabilizer to help stabilize the photothermographic element prior to exposure and processing. Such a thermal stabilizer provides improved stability of the photothermographic element during storage. Preferred thermal stabilizers are 2-bromo-2-arylsulfonylacetamides, such as 2-bromo-2-p-tolysulfonylacetamide; 2-(tribromomethyl sulfonyl)benzothiazole; and 6-substituted-2,4-bis(tribromomethyl)-s-triazines, such as 6-methyl or 6-phenyl-2,4-bis(tribromomethyl)-s-triazine.

A photothermographic element typically has a transparent protective layer comprising a film forming binder, preferable a hydrophilic film forming binder. Such binders include, for example, crosslinked polyvinyl alcohol, gelatin, poly(silicic acid), and the like. Particularly preferred are binders comprising poly(silicic acid) alone or in combination with a water-soluble hydroxyl-containing monomer or polymer as described in the US Patent No. 4,828,971.

The term "protective layer" is used in this application to mean a transparent, image insensitive layer that can be an overcoat layer, that is a layer that overlies the image sensitive layer(s), or a backing layer, that is a layer that is on the opposite side of the support from the image sensitive layer(s). The imaging element can contain an adhesive interlayer between the protective layer and the underlying layer(s). The protective layer is not necessarily the outermost layer of the imaging element.

The protective layer can contain an electrically conductive layer having a surface resistivity of less than 5 x 10¹¹ ohms/square. Such electrically conductive overcoat layers are described in US Patent No. 5,547,821.

A photothermographic imaging element generally includes at least one transparent protective layer containing matte particles. Either organic or inorganic matte particles can be used. Examples of organic matte particles are often in the form of beads, of polymers such as polymeric esters of acrylic and methacrylic acid, e.g., poly(methylmethacrylate), styrene polymers and copolymers, and the like. Examples of inorganic matte particles are of glass, silicon dioxide, titanium dioxide, magnesium oxide, aluminum oxide, barium sulfate, calcium carbonate, and the like. Matte particles and the way they are used are further described in U.S. Patent Nos. 3,411,907, 3,754,924, 4,855,219, 5,279,934, 5,288,598, 5,378,577, 5,750,328 and EP -B- 0 709 399.

A wide variety of materials can be used to prepare the protective layer that is compatible with the requirements of photothermographic elements. The protective layer should be transparent and should not adversely affect sensitometric characteristics of the photothermographic element such as minimum density, maximum density and photographic speed. Useful protective layers include those comprised of poly(silicic acid) and a water-soluble hydroxyl containing monomer or polymer that is compatible with poly(silicic acid) as described in U.S. Patent 4,741,992 and 4,828,971. A combination of poly(silicic acid) and poly(vinyl alcohol) is particularly useful. Other useful protective layers include those formed from polymethylmethacrylate, acrylamide polymers, cellulose acetate, crosslinked polyvinyl alcohol, terpolymers of acrylonitrile, vinylidene chloride, and 2-(methacryloyloxy)ethyl-trimethylammonium methosulfate, crosslinked gelatin, polyesters and polyurethanes.

Particularly preferred protective layers are described in above-mentioned U.S. Patent Nos. 5,310,640 and 5,547,821.

The photothermographic elements are exposed by means of various forms of energy, including those to which the photographic silver halides are sensitive, e.g., include ultraviolet, visible and infrared regions of the electromagnetic spectrum as well as electron beam and beta radiation, gamma ray, x-ray, alpha particle, neutron radiation and other forms of corpuscular wave-like radiant energy in either non-coherent (random phase) or coherent (in phase) forms produced by lasers. Exposures are monochromatic, orthochromatic, or panchromatic depending upon the spectral sensitization of the photographic silver halide. Imagewise exposure is preferably for a time and intensity sufficient to produce a developable latent image in the photothermographic element.

After imagewise exposure of the photothermographic element, the resulting latent image is developed merely by overall heating the element to thermal processing temperature. This overall heating merely involves heating the photothermographic element to a temperature within the range of about 90°C. to 180°C. until a developed image is formed, such as within about 0.5 to about 60 seconds. By increasing or decreasing the thermal processing temperature a shorter or longer time of processing is useful. A preferred thermal processing temperature is within the range of about 100°C. to about 140°C.

Heating means known in the photothermographic imaging arts are useful for providing the desired processing temperature for the exposed photothermographic element. The heating means is, for example, a simple hot plate, iron, roller, heated drum, microwave heating means, heated air or the like.

Thermal processing is preferably carried out under ambient conditions of pressure and humidity. Conditions outside of normal atmospheric pressure and humidity are useful.

The components of the photothermographic element can be in any location in the element that provides the desired image. If desired, one or more of the components can be in one or more layers of the element. For example, in some cases, it is desirable to include certain percentages of the reducing agent, toner, stabilizer and/or other addenda in the overcoat layer over the photothermographic imaging layer of the element. This, in some cases, reduces migration of certain addenda in the layers of the element.

It is necessary that the components of the imaging combination be "in association" with each other in order to produce the desired image. The term "in association" herein means that in the photothermographic element the photographic silver halide and the image forming combination are in a location with respect to each other that enables the desired processing and forms a useful image.

The following examples illustrate the preparation and evaluation of imaging elements of this invention.

### Dye concentrate pellet formulation

Several different approaches to incorporate the dyes of the present invention into polyester resin concentrates were used as illustrated below.

### Example 1

For dye quantities up to 10 grams, the following procedure was followed. Polyester (poly(ethylene terphthalate)) pellets (nominal batch size was 40 grams of resin) were melted at in a Banbury PL 750 mixer prior to adding the dye. The pellets were melted at 277°C for 90 sec at 20 rpm. The dye was then added at 5 weight % to the molten polymer, the blend was stirred at 20 rpm for 45 sec, and then at 45 rpm for 60 sec. The mixer was then stopped, and the molten material was collected on a metal plate. After cooling, the material was ground using a 2 mm screen. This was combined with polyester pellets in a suitable container and physically mixed to achieve the final dye loadings of, for example 10 to 200,000 ppm, preferably 20 to 50,000 ppm.

### Example 2

For dye quantities up to 100 grams, the dye was physically blended (by shaking in a suitable container like a plastic bag) at a final desired concentration of 0.01 to 5.0 weight %. The blend was fed into a Werner & Pfleiderer ZDS-K28 twin screw compounder with a final melt temperature of 266°C, and was extruded as strands. The strands were cooled in a water bath at about 30°C, and subsequently chopped to yield pellets.

### Example 3

For dye quantities over 100 grams, the dye and polyester pellets were put in separate feed hoppers of a Welding Engineers twin-screw compounder. The dye feed rate was adjusted to between 0.1 and 10 weight % (most preferably between 0.5 and 6.0 weight %) of the total. The melt temperature was 236°C and the compounded material was extruded as a strand which was cooled with a water bath maintained at 42°C and chopped to yield pellets.

### Production of Polyester Support with Incorporated Dye

Again, as with the manufacture of concentrate pellets, several methods were used to manufacture polyester support containing the dyes of the present invention, depending on the quantities of material needed. In all cases, the polyester pellets and dye blends were dried for at least sixteen hours at 80-100°C prior to film casting.

### Example 4

For final blends of 2 kg or less, the polyester pellets and the dye concentrate (0.1 to 10 weight % of the total amount) were physically combined and mixed in a ratio to yield final, desired dye loading (for example, 10-200,000 ppm, preferably 20-1000 ppm). The blend was then placed in the feed hopper of a Randcastle extruder and a cast film of about 250 micron thickness was produced. Although the film uniformity was poor, this method did provide data as to thermal stability of the dye during extrusion and absorbance characteristics of the cast film.

### Example 5

For final blends of up to 5 kg, the polyester pellets were physically combined with the dye concentrate pellets (0.1 to 10 weight %, preferably 0.5 to 7 weight % dye) and mixed in a ratio to yield final, desired dye loading (for example, 10-200,000 ppm, preferably 20-1000 ppm). The desired casting conditions were established on a Killion cast film line, using unblended polyester pellets. Once a stable film of 170 t0 250 micron thickness was obtained, the feed hopper was drained and the blend placed in the feed hopper. Additional unblended polyester pellets were added on top of the blend to insure accurate feed rates. This procedure yielded uniform cast films of 170 to 205 micron thickness.

### Example 6

For final blends of up to 5 kg, the polyester pellets were physically combined with the dye concentrate (0.1 to 10 weight %, preferably 0.5 to 7 weight %) and mixed in a ratio to yield final, desired dye loading (for example, 10-200,000 ppm, preferably 20-1000 ppm). The desired casting conditions were established on a Davis-Standard Thermatic Model 2SIN25 biaxial film line to produce biaxially oriented films nominally 178 microns in thickness with a combined stretch ratio of from 9.0 to 16.0, most preferably from 11.5 to 14.0. Once a stable film was established with unblended polyester, the feed hopper was drained and the blend was introduced into the feed hopper. As the level in the hopper began to decrease, additional unblended polyester pellets were added to the feed hopper. This procedure yielded uniform, biaxially oriented films of 178 micron thickness after the transition from clear to dyed support was complete.

### Example 7

The desired casting conditions were established on a biaxial film line to produce biaxially oriented films nominally 178 microns in thickness with a combined stretch ratio of from 9.0 to 17.5, most preferably from 11.5 to 14.0. Once a stable film was established with unblended polyester, a dye concentrate (0.1 to 10 weight %, preferably 0.5 to 7 weight %) was added to the feed stream from a secondary feed hopper at a rate sufficient to achieve a final dye loading of 50 to 800 ppm. This procedure yielded uniform, biaxially oriented films once the transition from clear to dyed support was complete.

### Example 8

The desired casting conditions were established on a biaxial film line to produce biaxially oriented films nominally 178 microns in thickness with a combined stretch ratio of from 9.0 to 17.5, most preferably from 11.5 to 14.0. Once a stable film was established with a mixture of unblended polyester and a concentrate of dye B-1 (1-20 weight %, preferably 5-15 weight %) fed from a secondary feed hopper, the dye concentrate of the present invention (0.1 to 10 weight %, preferably 0.5 to 7 weight %) was added to the feed stream via a tertiary feed hopper at a rate sufficient to achieve a final dye loading of 50 to 800 ppm. This procedure yielded uniform, biaxially oriented films once the transition from blue support to blue+dyed support was complete.

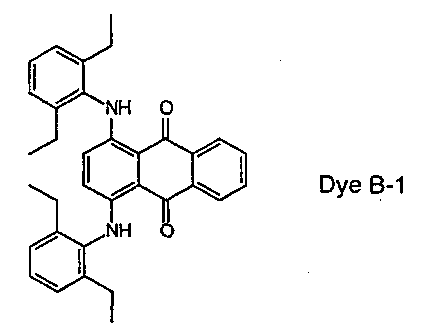

### Coating Example 1

This illustrates the invention. The following components were mixed to form an emulsion (A):

| **Component** | **Grams** |
|---|---|
| Silver Behenate dispersion (contains 26.4% by weight silver behenate in 8.5% by weight methyl ethyl ketone (MEK) / toluene (80:20) solution of polyvinylbutyral (Butvar B-76 which is a trademark of and available from the Monsanto Co., U.S.A)) (organic silver salt oxidizing agent) | 877.8 |
| Silver bromide (silver bromide emulsion contains 45.9 g Ag in 9% by weight MEK solution of Butvar B-76) containing sodium Iodide (NaI) (0.1% by weight) (speed increasing addendum) | 127.1 |
| Sensitizing dye (0.17% by weight solution in MEK / 2-ethoxy ethanol (90:10)) | 64.4 |
| Succinimide (toner) | 3.5 |
| phthalimide (toner) | 14.0 |
| SF-96 (10% by weight SF-96 in MEK. (SF-96 is a silicone fluid, (a dimethoxypolysiloxane fluid) and is a trademark of and available from General ElectricCo., U.S.A.) (surfactant) | 1.6 |
| 2-Bromo-2-[(4-methylphenyl)sulfonyl] acetamide (antfoggant) | 2.6 |
| Naphthyl triazine (print-up stabilizer) | 0.6 |
| Palmitic acid (10% by weight in 10.5% by weight MEK solution of Butvar B-76)(antifoggant) | 30.6 |
| N (4-hydroxyphenyl)benzenesulfonamide (12% by weight in 10.5% by weight MEK solution of Butvar B-76) (developing agent) | 350.0 |
| Butvar B-76 (10.5% by weight in MEK / Toluene 65:35) (binder) | 105.2 |

The resulting photothermographic solution silver halide composition was coated at a wet laydown of 68.6 grams/m² on a blue (0.16 overall visual density) poly-(ethyleneterephthalate) film support, containing 250 ppm of dye B-1.

The coating was permitted to dry and was then overcoated with the following composition (B):

| **Component** | **Grams** |
|---|---|
| Distilled Water | 226.4 |
| Polyvinyl Alcohol (PVA) (6.2% by weight in distilled water) (binder) | 443.0 |
| Tetraethyl Orthosilicate (35.4% by weight in methanol / water (53:47)) (hardner) | 251.6 |
| p-Toluene Sulfonic Acid (1N solution in distilled water) | 3.1 |
| Olin 10G (10% by weight in distilled water. Olin 10G is para-isononylphenoxy polyglycidol and is a trademark of and available from the Olin Corp., U.S.A.) (surfactant) | 10.0 |
| Silica (1.5 micron) (matting agent) | 3.0 |

The resulting overcoat formulation was coated at a wet laydown of 40.4 grams/m². The coating was permitted to dry.

### Coating Example 2

An emulsion (A) was prepared as described in Coating Example 1, and was coated at a wet laydown of 68.6 grams/m² on a dyed (0.14 density) poly-(ethyleneterephthalate) film support generated according to example 8 above.
The coating was permitted to dry and was then overcoated with the same overcoat composition (B) in Coating Example 1 at a wet laydown of 40.4 grams/m². The coating was permitted to dry.

### Coating Example 3

An emulsion (A) was prepared as described in Example 1, and was coated at a wet laydown of 68.6 grams/m² on a dyed (0.15 density) poly-(ethyleneterephthalate) film support generated according to Example 8 above.
The coating was permitted to dry and was then overcoated with the same overcoat composition (B) in Coating Example 1 at a wet laydown of 40.4 grams/m². The coating was permitted to dry.

### Coating Example 4

An emulsion (A) was prepared as described in Coating Example 1, and was coated at a wet laydown of 68.6 grams/m² on a dyed (0.16 density) poly-(ethyleneterephthalate) film support generated according to Example 8 above.
The coating was permitted to dry and was then overcoated with the same overcoat composition (B) in Coating Example 1 at a wet laydown of 40.4 grams/m². The coating was permitted to dry.

### Coating Example 5

This illustrates the invention. The following components were mixed to form an emulsion (A):

| **Component** | **Grams** |
|---|---|
| Silver Behenate dispersion (contains 28.0% By weight silver behenate in 7.0% by weight Methyl ethyl ketone (MEK)/toluene (80:20) Solution of polyvinylbutyral (Butvar B-76) which is a trademark of and available from the Monsanto Co., U.S.A.)) (organic silver salt oxidizing agent) | 887.8 |
| Silver bromide (silver bromide emulsion contains 42.03g Ag in 8.6% by weight MEK solution of Butvar B-76) containing sodium Iodide (Nal) (0.1% by weight) (speed increasing addendum) | 163.3 |
| Sensitizing dye (0.17% by weight solution in MEK/2-ethoxy ethanol (90:10)) | 76.3 |
| Succinimide (toner) | 4.7 |
| phthalimide (toner) | 9.3 |
| SF-96 (10% by weight SF-96 in MEK. SF-96 is a silicone and is a tradename of General Electric Co., U.S.A.) (surfactant) | 1.6 |
| 2-Bromo-2-[4-methylphenyl)sulfonyl] acetamide (antifoggant) | 2.6 |
| Naphthyl triazine (print-up stabilizer) | 0.6 |
| Palmitic acid (10% by weight in 10.5% by weight MEK solution of Butvar B-76)(antifoggant) | 31.1 |
| N (4-hydroxyphenyl)benzenesulfonamide (12% by weight in 10.5% by weight MEK/Methanol (50:50) solution of Butvar B-76) (developing agent) containing 0.74% Trimethyl Borate (crosslinking agent) | 513.8 |
| Buvar B-76 (18.3% by weight in MEK/Toluene/Methanol 77:12:11) (binder) To remove add 10.8 to 877 | 43.1 |

The resulting photothermogtaphic solution silver halide composition was coated at a wet laydown of 79.6 grams/m2 on a green (0.08 density) poly-(ethyleneterephthalate) film support. The coating was permitted to dry and was then overcoated with the following compositon:

| **Component** | **Grams** |
|---|---|
| Distilled Water | 342.3 |
| Polyvinyl Alcohol (PVA) (6.4% by weight in distilled water) (binder) | 250.5 |
| Tetraethyl Orthosilicate (35.4% by weight in methanol / water (53:47) (hardner) | 146.9 |
| p-Toluene Sulfonic Acid | 0.3 |
| Lodyne S-100 (7.75% by weight in water) (surfactant) | 0.2 |
| Olin 10G (10% by weight in distilled water Olin 10G is para-isononylphenoxy polyglycidol and is a trademark of and available from the Olin Corp., U.S.A.) (surfactant) | 6.0 |
| Methylmethacrylate matte (2.5 micron) (24.5 by weight in a 1% gelatin in water solution) (matting agent) | 1.2 |

The resulting overcoat formulation was coated at a wet laydown of 40.4 grams/m2. The coating was permitted to dry. Then the pelloid side was coated with the following composition:

| **Component** | **Grams** |
|---|---|
| Distilled Water | 342.2 |
| Polyvinyl Alcohol )PVA) (6.4% by weight in distilled water) (binder) | 250.5 |
| Tetraethyl Orthosilicate (35.4% by weight in methanol/water (53:47)) (hardner) | 146.9 |
| p-Toluene Sulfonic Acid | 0.3 |
| Lodyne S-100 (7.75% by weight in water) (surfactant) | 0.2 |
| Olin 10G (10% by weight in distilled water. Olin 10G is para-isononylphenoxy polyglycidol and is a trademark of and available from the Olin Corp., U.S.A.) (surfactant) | 6.0 |
| Styrene-divinylbenzene (50/50) matte (5.0 micron) (24.5 by weight in a 1% gelatin in water solution) (matting agent) | 1.2 |

The examples were exposed using a 683 nm 30 mw laser and processed at 123°C for 5 sec to produce a developed silver image. The developed silver image had a maximum density of 3.5 with a relative Log E speed of 1.00 measured at a density of 1.0 above Dₘᵢₙ.

The SMPTE patterns from the exposed and developed examples were visually evaluated on a light box and graded according to their sharpness and overall appearance: 1- unacceptable, 2- marginally acceptable, 3- acceptable. The results are tabulated in the following Table.

**Table**

| **Coating Example** | **Visual density (D**_{**min**}**)** | **Density @ peak** | **SMPTE resolution** | |
|---|---|---|---|---|
| **1** | 0.24 | 0.26 | 1 | comparative |
| **2** | 0.14 | 0.7 | 2 | invention |
| **3** | 0.16 | 1.0 | 3 | invention |
| **4** | 0.18 | 1.3 | 3 | invention |
| **5** | 0.18 | 0.9 | 3 | invention |

As can be readily seen, the examples of the present invention provide sharp images without increasing the visual density significantly.

Fig. 1 shows the absorbance spectrum of the photothermographic element of Coating Example 5.

The invention has been described in detail with particular reference to certain preferred embodiments thereof, but it will be understood that variations and modifications can be effected within the scope of the invention.

## Claims

1. A photothermographic element comprising at least one photosensitive layer on a support, wherein the support contains a dye of structure I: 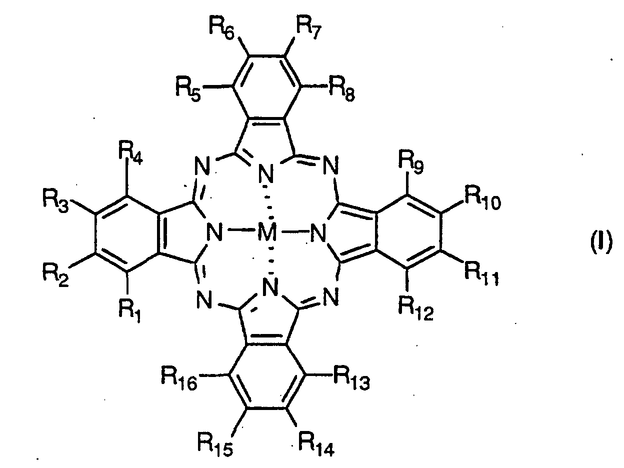 wherein
M is a multi-valent metal atom;
each of R₁, R₄, R₅, R₈, R₉, R₁₂,R₁₃, and R₁₆ independently represent a hydrogen atom, or a substituted or unsubstituted, branched or unbranched alkyl group;
each of R₂, R₃, R₆, R₇, R₁₀, R₁₁, R₁₄, and R₁₅ independently represent a hydrogen atom, a halogen atom, a substituted or unsubstituted, branched or unbranched alkyl group, a substituted or unsubstituted aryl group, a substituted or unsubstituted alkoxy group or a substituted or unsubstituted aryloxy group; or one or more of the adjacent pairs R₁ and R₂, R₂ and R₃, R₃ and R₄, R₅ and R₆, R₆ and R₇, R₇ and R₈, R₈ and R₉, R₉ and R₁₀, R₁₀ and R₁₁, R₁₁ and R₁₂, R₁₃ and R₁₄, R₁₄ and R₁₅ and R₁₅ and R₁₆ taken together may represent the atoms necessary to form a substituted or unsubstituted aromatic or heteroaromatic ring; and wherein the support has a peak absorption between 660 nm and 800 nm.

2. A photothermographic element according to claim 1, wherein at least one of R₂ or R₃ is a tertiary alkyl.

3. A photothermographic element according to claim 1, wherein M is Mg, Ni, Zn, or Cu.

4. A photothermographic element according to claim 1, wherein the support comprises polyester or cellulose acetate.

5. A photothermographic element according to claim 4, wherein the support comprises a polyester selected from polyethylene terephthalate and polyethylene naphthalate.

6. A photothermographic element according to claim 1, wherein the support further comprises an anthraquinone dye of the general formula: 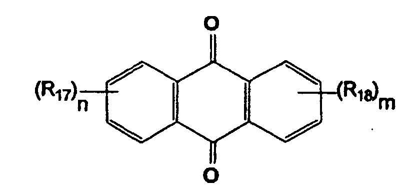 wherein R 17 and R18 8 are independently a hydrogen atom or an amino group of the formula: 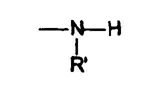 wherein R' is substituted or unsubstituted alkyl or substituted or unsubstituted aryl and n and m are independently 1-4, with the proviso that at least one of n or m is at least 1.

7. A photothermographic element according to claim 6, wherein the anthraquinone dye is of the formula: 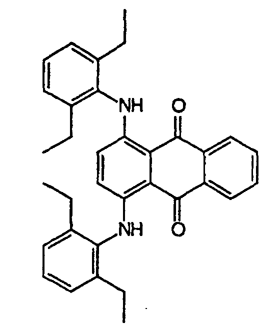 or

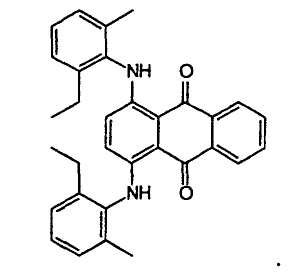

8. A photothermographic element according to claim 1, wherein the support comprises at least two dyes of structure (I).

## Patentansprüche

1. Photothermographisches Element mit mindestens einer photosensitiven Schicht auf einem Träger, in dem der Träger einen Farbstoff der Struktur I enthält: 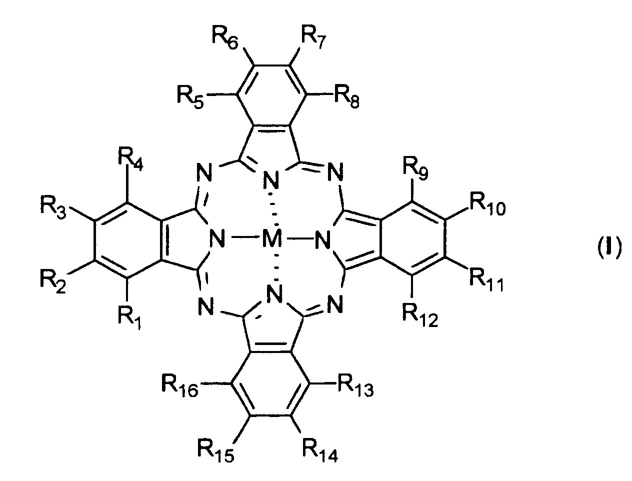 worin
M ein mehrwertiges Metallatom ist;
R₁, R₄, R₅, R₈, R₉, R₁₂, R₁₃ und R₁₆ jeweils unabhängig voneinander stehen für ein Wasserstoffatom oder eine substituierte oder unsubstituierte, verzweigte oder unverzweigte Alkylgruppe;
R₂, R₃, R₆, R₇, R₁₀, R₁₁, R₁₄ und R₁₅ jeweils unabhängig voneinander stehen für ein Wasserstoffatom, ein Halogenatom, eine substituierte oder unsubstituierte, verzweigte oder unverzweigte Alkylgruppe, eine substituierte oder unsubstituierte Arylgruppe, eine substituierte oder unsubstituierte Alkoxygruppe oder eine substituierte oder unsubstituierte Aryloxygruppe; oder worin ein oder mehrere einander benachbarte Paare von R₁ und R₂, R₂ und R₃, R₃ und R₄, R₅ und R₆, R₆ und R₇, R₇ und R₈, R₈ und R₉, R₉ und R₁₀, R₁₀ und R₁₁, R₁₁ und R₁₂, R₁₃ und R₁₄, R₁₄ und R₁₅ sowie R₁₅ und R₁₆ zusammen die Atome darstellen können, die erforderlich sind zur Erzeugung eines substituierten oder unsubstituierten aromatischen oder heteroaromatischen Ringes, und worin der Träger eine Spitzen-Absorption zwischen 660 nm und 800 nm aufweist.

2. Photothermografisches Element nach Anspruch 1, in dem mindestens einer der Reste R₂ oder R₃ eine tertiäre Alkylgruppe ist.

3. Photothermografisches Element nach Anspruch 1, in dem M steht für Mg, Ni, Zn oder Cu.

4. Photothermografisches Element nach Anspruch 1, in dem der Träger Polyester oder Celluloseacetat enthält.

5. Photothermografisches Element nach Anspruch 4, in dem der Träger einen Polyester enthält, der ausgewählt ist aus Polyehylenterephthalat und Polyethylennaphthalat.

6. Photothermografisches Element nach Anspruch 1, in dem der Träger ferner einen Anthrachinon-Farbstoff der allgemeinen Formel enthält: 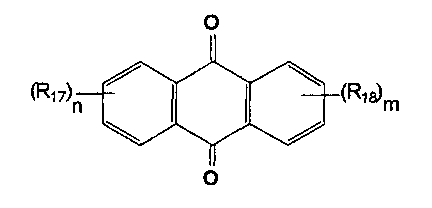 worin R₁₇ und R₁₈ unabhängig voneinander stehen für ein Wasserstoffatom oder eine Aminogruppe der Formel: 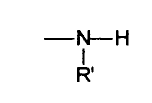 worin R' eine substituierte oder unsubstituierte Alkylgruppe oder eine substituierte oder unsubstituierte Arylgruppe ist und n und m unabhängig voneinander stehen für 1-4, wobei gilt, dass mindestens einer von n oder m mindestens 1 ist

7. Photothermografisches Element nach Anspruch 6, in dem der Anthrachinon-Farbstoff der Formel entspricht: 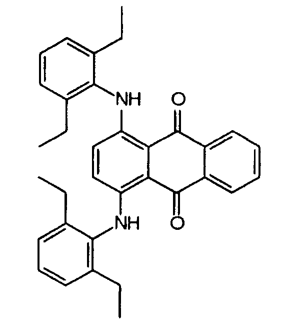 oder

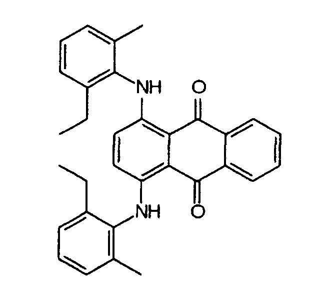

8. Photothermografisches Element nach Anspruch 1, in dem der Träger mindestens zwei Farbstoffe der Struktur (I) enthält.

## Revendications

1. Elément photothermographique comprenant au moins une couche photosensible appliquée sur un support, dans lequel le support contient un colorant de structure I : 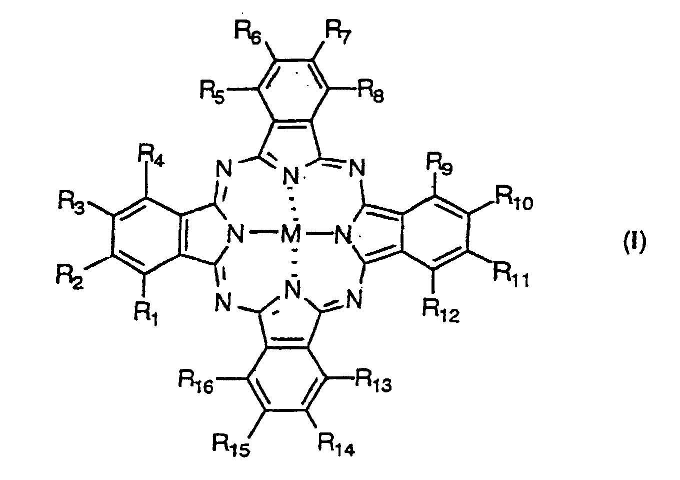 dans laquelle :
M est un atome de métal polyvalent ;
R₁, R₄, R₅, R₈, R₉, R₁₂, R₁₃ et R₁₆ représentent chacun séparément un atome d'hydrogène ou un groupe alkyle, ramifié ou non ramifié, substitué ou non substitué ;
R₂, R₃, R₆, R₇, R₁₀, R₁₁, R₁₄ et R₁₅ représentent chacun séparément un atome d'hydrogène, un atome d'halogène, un groupe alkyle, ramifié ou non ramifié, substitué ou non substitué, un groupe aryle substitué ou non substitué, un groupe alcoxy substitué ou non substitué ou un groupe aryloxy substitué ou non substitué ; ou une ou plusieurs des paires adjacentes R₁ et R₂, R₂ et R₃, R₃ et R₄, R₅ et R₆, R₆ et R₇, R₇ et R₈, R₈ et R₉, R₉ et R₁₀, R₁₀ et R₁₁, R₁₁ et R₁₂, R₁₃ et R₁₄, R₁₄ et R₁₅ et R₁₅ et R₁₆, prises ensemble, peuvent représenter les atomes nécessaires pour former un noyau aromatique ou hétéroaromatique, substitué ou non substitué, et dans lequel le support présente un pic d'absorption entre 660 et 800 nm.

2. Elément photothermographique selon la revendication 1, dans lequel au moins l'un des substituants R₂ et R₃ est un groupe alkyle tertiaire.

3. Elément photothermographique selon la revendication 1, dans lequel M représente Mg, Ni, Zn ou Cu.

4. Elément photothermographique selon la revendication 1, dans lequel le support comprend un polyester ou un acétate de cellulose.

5. Elément photothermographique selon la revendication 4, dans lequel le support comprend un polyester choisi entre le poly(éthylène téréphtalate) et le poly(éthylène naphtalate).

6. Elément photothermographique selon la revendication 1, dans lequel le support comprend aussi un colorant anthraquinone ayant la formule générale : 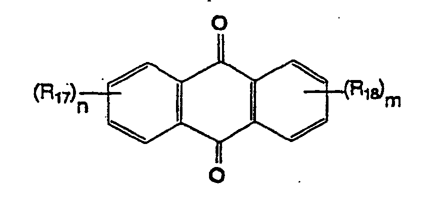 dans laquelle R₁₇ et R₁₈ représentent séparément un atome d'hydrogène ou un groupe amino de formule : 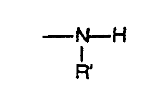 dans laquelle R' représente un groupe alkyle substitué ou non substitué ou un groupe aryle substitué ou non substitué, et n et m sont séparément des nombres entiers de 1 à 4 à condition que au moins l'un de n et m soit au moins égal à 1.

7. Elément photothermographique selon la revendication 6, dans lequel le colorant anthraquinone a la formule : 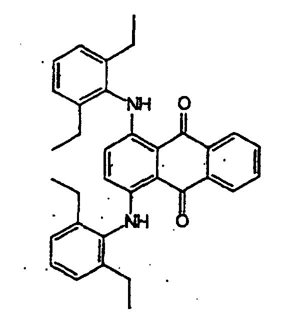 ou

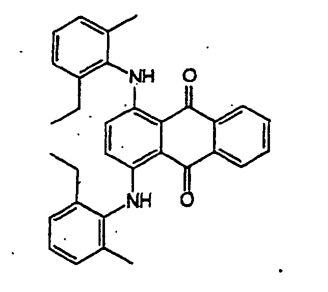

8. Elément photothermographique selon la revendication 1, dans lequel le support comprend au moins deux colorants de structure (I).
